(19) Europäisches Patentamt
European Patent Office
Office européen des brevets

(11) Publication number: **0 544 001 A1**

(12) **EUROPEAN PATENT APPLICATION published in accordance with Art. 158(3) EPC**

(21) Application number: **92908212.1**

(51) Int. Cl.[5]: **G05D 3/12**

(22) Date of filing: **15.04.92**

(86) International application number: **PCT/JP92/00478**

(87) International publication number: **WO 92/18920 (29.10.92 92/27)**

(30) Priority: **16.04.91 JP 110989/91**

(43) Date of publication of application: **02.06.93 Bulletin 93/22**

(84) Designated Contracting States: **DE IT SE**

(71) Applicant: **FANUC LTD.**
**3580, Shibokusa Aza-Komanba, Oshino-mura**
**Minamitsuru-gun, Yamanashi 401-05(JP)**

(72) Inventor: **TORII, Nobutoshi**
**Room 308, Fuyohaitsu 65-4**
**Takakura-machi, Hachioji-shi, Tokyo 192(JP)**
Inventor: **NIHEI, Ryo, Room 7-210, Fanuc Manshonharimomi**
**3539-1, Shibokusa, Oshino-mura**
**Minamitsuru-gun, Yamahashi 401-05(JP)**
Inventor: **KATO, Tetsuaki, Room 8-101, Fanuc Manshonharimomi**
**3511-1, Shibokusa, Oshino-mura**
**Minamitsuru-gun, Yamanashi 401-05(JP)**

(74) Representative: **Billington, Lawrence Emlyn et al**
**Haseltine Lake & Co Hazlitt House 28, Southampton Buildings Chancery Lane**
**London WC2A 1AT (GB)**

(54) **ADAPTIVE PI CONTROL SYSTEM.**

(57) An adaptive proportional integration control system for controlling a robot or a machine tool having large load fluctuation. This PI control system includes a speed control loop and a pre-compensator (31) disposed in the speed control loop. The pre-compensator is equivalent to a system formed by coupling a norm model (51) and an inverse system (52) of a servo motor (22), and has adaptability. Since the pre-compensator (31) is disposed in the speed control loop, robust control can be made even when inertia of a load drastically fluctuates.

FIG. 5

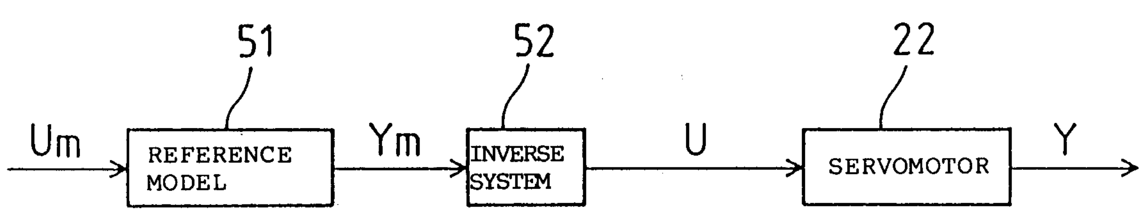


EP 0 544 001 A1

## Technical Field

This invention relates to an adaptive proportional-plus-integral control system (adaptive PI control system) using adaptive control, and more particularly, to an adaptive PI control system for controlling a robot, a machine tool which is subject to large load variation or the like.

## Background Art

Conventionally, in plants such as robots and the like, systems are generally controlled by a PI control loop having a fixed gain, and parameters of the systems are adjusted manually through trial and error.

For the PI control system such as those used in the robots and the like, it is important to have quick response and robustness for being capable of coping with the variation of the parameters such as the variation of the inertia.

When a servo system is constituted of a conventional PI control system, a large feedback gain will be needed for obtaining quick response of the system, since the control by such a conventional system is solely dependent on the feedback loop. If the feedback gain is too large, however, the stability of the servo system is lost and oscillation is liable to occur. Thus, in the case of a conventional system, the response can be enhanced only to a limited extent. To improve the response while at the same time maintaining the system stability, a control method using a feedforward loop may be employed; however, this method has a drawback such that the control operation is easily affected by a parameter variation in the controlled system due to the absence of the feedback from the controlled system.

Even in the case of a controlled system in which the quick response is not so important, parameter adjustment of the feedback loop so time-consuming that the actual application of this method is very difficult due to the difficulty of setting the parameters to optimum values.

## Disclosure of the Invention

This invention was contrived in view of the above circumstances, and an object thereof is to provide an adaptive PI control system including a servo system having desired response.

According to this invention, there is provided an adaptive PI control system for carrying out PI control of a servomotor, characterized in that a pre-compensator equivalent to a system which is a combination of a reference model and an inverse system of the servomotor and having adaptivity is provided in a speed control loop.

The pre-compensator is composed of the reference model and the inverse system of the servomotor. Thus, in the speed control loop, the servomotor and the inverse system countervail each other, and the loop is equivalent to a single system of the reference model. Namely, an ideal system can be formed by designing a desired reference model.

Further, since the pre-compensator has adaptivity, the gain is automatically adjusted, thus requiring no manual gain adjustment. Furthermore, an I-type servo system including an integrator (I) in its loop is formulated, unlike conventional adaptive control systems, and therefore, steady-state deviation can be eliminated.

## Brief Description of the Drawings

FIG. 1 is a block diagram of a speed control loop to which a control law and adaptivity law according to this invention are applied;

FIG. 2 is a composition diagram showing by way of example the hardware of a robot system for carrying out this invention;

FIG. 3 is a diagram illustrating a pre-compensator and a servomotor;

FIG. 4 is a diagram showing the system of FIG. 3 in terms of a reference model etc.;

FIG. 5 is a diagram showing the system of FIG. 4 in terms of the reference model and an inverse system;

FIG. 6 is a block diagram of a speed control loop in which the speed control loop of FIG. 1 is applied to PI control; and

FIG. 7 is a flowchart of a process executed by a digital signal processor in the embodiment shown in FIG. 2.

Best Mode of Carrying Out the Invention

Referring first to FIG. 2, the hardware of a robot system according to one embodiment of this invention will be described. In FIG. 2, a host processor (CPU) 10 globally controls the robot, and a robot position command from the host processor 10 is written in a common RAM 15. Elements connected to the host processor 10, such as a ROM and a RAM, are omitted in the figure.

A DSP (digital signal processor) 11 reads out the position command from the common RAM 15 at regular intervals of time in accordance with a system program stored in a ROM 12. Based on the position command and a position feedback from a pulse coder 23 built in a servomotor 22, the DSP 11 obtains a position deviation, a speed and a speed deviation, and supplies a current command based on these values to a servo amplifier 21 via a DSL (digital servo LSI) 14 to thereby drive the servomotor 22. A robot arm 26 is actuated by the servomotor 22. More particularly, the DSP 11 controls three loops of the servomotor 22, i.e., position loop, speed loop, and current loop.

The DSP 11 also estimates a parameter of the speed control loop on the basis of a torque command (current command) U or a speed Y, etc., as described later, and accomplishes, by means of software, the function of a pre-compensator having a reference model and an inverse model of the servomotor 22.

The pre-compensator will be described with reference to FIG. 3.

The pre-compensator 31 has an integral gain $K_1$ and a proportional gain $K_2$. An element 32 representing the transfer function of the servomotor 22 has a torque constant $K_t$, inertia J, and dynamical friction coefficient A. In this system, it is assumed that, when the element 32 is given the torque command U, it outputs the speed Y.

Provided that the system of FIG. 3 has an ideal gain having a rise time of T (second), then

$$K_1 = A/(K_t{}^*T)$$

and

$$K_2 = J/(K_t{}^*T)$$

These equations are obtained by solving the equation

$$(V_{cmd} - Y)^*[(K_1/S) + K_2]^*[K_t/(J^*S + A)] = Y$$

which represents a servo system comprising the system of FIG. 3 plus speed feedback, i.e., a system for inputting a speed deviation $U_m$, obtained by subtracting the speed feedback Y from the speed command $V_{cmd}$, to the pre-compensator 31, with the equation

$$Y/V_{cmd} = 1/(T^*S + 1)$$

being substituted in the above equation.

Substituting $K_1$ and $K_2$ for the element 31 of FIG. 3 provides

$$(K_1/S) + K_2 = [1/(T^*S)]^*[(J^*S + A)/K_t]$$

Accordingly, the system of FIG. 3 can be expressed as shown in FIG. 4, i.e., as a series connection including an element 41, an element 42, and the element 32 representing the transfer function of the servomotor.

Furthermore, the system of FIG. 4 can be regarded as a system composed of a reference model 51, an inverse system 52 of the servomotor and the servomotor 22, as shown in FIG. 5.

That is, a pre-compensator equivalent to the combination of the reference model 51 and the inverse system 52 of the servomotor, shown in FIG. 5, need to be constituted. The following is a detailed description of how the pre-compensator is constituted.

A controlled system to which adaptive control is applied is the servomotor 22, and the transfer function thereof is expressed as

$$K_t/(J^*S + A)$$

Here, if the reference model is defined as

$1/(T^*S)$

then the state equation of the controlled system is expressed as

$$(dX_1/dt) = [-A/J]^*X_1 + [K_t/J]^*U \qquad (1a)$$

and

$$Y = [1]^*X_1 \qquad (1b)$$

Similarly, the state equation of the reference model is expressed as

$$(dX_{1m}/dt) = [0]^*X_{1m} + [1/T]^*U_m \qquad (2a)$$

and

$$Y_m = [1]^*X_{1m} \qquad (2b)$$

Next, the inverse system of the servomotor 22, particularly the inverse system based on state feedback, is formulated. Differentiating both sides of equation (1b) and substituting equation (1a) provides the following equation:

$$Y' = X_1' = (-A/J)^*X_1 + (K_t/J)^*U \qquad (3)$$

Given $q_1$ as a parameter, and calculating [equation (3) + equation (1b)*$q_1$], followed by rearrangement, provides

$$U = -(J/K_t)^*[(-A/J) + q_1]^*X_1 + (J/K_t)^*(S + q_1)^*Y \qquad (4)$$

Equation (4) represents the inverse system of the servomotor. This equation is combined with the reference model 51, then from equations (2a) and (2b),

$$\begin{aligned} U &= -(J/K_t)*[(-A/J) + q_1]*X_1 \\ &\quad + (J/K_t)*(S + q_1)*[1/(T*S)]*U_m \\ &= -(J/K_t)*[(-A/J) + q_1]*X_1 \\ &\quad + (J/K_t)*[(1/T) + q_1*\{1/(T*S)\}]*U_m \qquad \ldots\ldots (5) \end{aligned}$$

Then, equation (4) is rewritten as follows:

$$U = K_1^*X_1 + G^*(S + q_1)^*Y \qquad (6)$$

The values $K_1$ and G are given as

$$K_1 = -(J/K_t)^*[(-A/J) + q_1]$$
$$G = J/K_t$$

$K_1$ and G include the inertia J and torque constant $K_t$ which are parameters of the servomotor, and thus cannot be directly obtained. Accordingly, the parameters $K_1$ and G are derived through estimation.

Both sides of equation (6) are individually divided by $(S + q_1)$, then

$U/(S + q_1) = K_1*[X_1/(S + q_1)] + G*Y$     (7)

Here, if V and $\zeta_1$ are defined as

$V = U/(S + q_1)$
$\zeta_1 = X_1/(S + q_1)$

then, equation (7) can be expressed in the following simple form:

$V = K_1*\zeta_1 + G*Y$     (8)

The identified model of equation (8) is defined as

$V_p \equiv K_{1p}*\zeta_1 + G_p*Y$     (9)

where the terms followed by the subscript "p" denote estimated values of plant parameters, and the terms without the subscript "p" denote actual parameters of the plant. That is, equation (8) represents the actual plant (servomotor), and the terms followed by the subscript "p" in equation (9) represent the estimated values of the respective plant (servomotor) parameters. The parameters V, $V_p$, $\zeta_1$ and Y are measurable or computable.

Here, if the estimation error of the plant parameters is defined as $\epsilon$, then the following equation holds:

$$\begin{aligned} \varepsilon &= V - V_p \\ &= (K_1 - K_{1p})*\zeta_1 + (G - G_p)*Y \end{aligned}$$

Further, where the Liapunov function is defined as $J_r$ equals $\epsilon^2$ (i.e., $J_r = \epsilon^2$), then

$\partial J_r/\partial K_{1p} = -2*\epsilon*\zeta_1$
$\partial J_r/\partial G_p = -2*\epsilon*Y$

From this, the adaptivity law is determined as follows:

$dK_{1p}/dt = \beta*\epsilon*\zeta_1$
$dG_p/dt = \beta*\epsilon*Y$

(where $\beta$ is a positive constant).
This is because $dJ_r/dt$ can be expressed as

$$\begin{aligned} dJ_r/dt &= (\partial J_r/\partial K_{1p})*(dK_{1p}/dt) + (\partial J_r/\partial G_p)*(dG_p/dt) \\ &= -2*\beta*\varepsilon^2*(\zeta_1^2 + Y^2) \end{aligned}$$

$$(\beta > 0)$$

and thus always takes a negative value. That is, the above equation indicates a monotonic decrease of the system, and thus converges to a minimum value

$J_r = \epsilon = 0$

Therefore,

$V = V_p$

and the parameter converges to the true value.

Consequently, from equation (5), the control law can be expressed as follows:

$$U = K_{1p}*X_1 + G_p*[(1/T) + q_1*\{1/(T*S)\}]*U_m \qquad (10)$$

The adaptivity law is given by the following equations:

$$dK_{1p}/dt = \beta*\epsilon*\zeta_1 \qquad (11)$$

$$dG_p/dt = \beta*\epsilon*Y \qquad (12)$$

$(\beta > 0)$

where V and $\zeta_1$ can be expressed as

$$V = U/(S + q_1)$$

and

$$\zeta_1 = X_1/(S + q_1)$$

FIG. 1 is a block diagram of a servomotor speed control loop to which the above control law and adaptivity law are applied. The speed Y is subtracted from the speed command $V_{cmd}$ at an adder 1, the output of which, i.e., the speed deviation $U_m$, is supplied to an element 2. The element 2 is made up of the proportional gain term (1/T) and the term ($q_1$/TS) which is the product of the proportional coefficient term for integration and the integral gain term.

An element 3 is a term for the estimated value of the plant parameter $G_p$, and is obtained by integrating both sides of the aforementioned equation (12). Similarly, an element 6 is a term for the estimated value of the plant parameter $K_{1p}$, and is obtained by integrating both sides of equation (11).

A value obtained by multiplying the output of the element 2 by the estimated value of the plant parameter $G_p$ is added to the value obtained by multiplying the speed Y by the estimated value of the plant parameter $K_{1p}$, on an adder 4, to obtain a torque command U (the calculation of equation (10)), which is outputted to the servomotor 22. The parameter $V_p$ naturally converges to V. In this case, the elements 2, 3 and 6 and the adder 4 constitute the reference model 51 and inverse system 52 shown in FIG. 5.

Finally, equation (10) can be modified according to PI control, with $X_1$ rewritten as $(1/T*S)*U_m$ (i.e., $X_1 = (1/T*S)*U_m$), as follows:

$$U = K_{1p}*X_1 + G_p*[(1/T) + q_1*\{1/(T*S)\}]*U_m$$

$$= K_{1p}*\{1/(T*S)\}*U_m + G_p*[(1/T) + q_1*\{1/(T*S)\}]*U_m$$

$$= (K_{1p} + G_p*q_1)*\{1/(T*S)\}*U_m + G_p*(1/T)*U_m \quad \ldots (13)$$

FIG. 6 is a block diagram of a servomotor speed control loop for another PI control. Specifically, the block diagram corresponds to equation (13). The speed Y is subtracted from the speed command $V_{cmd}$ on an adder 61, the output of which is supplied to elements 62 and 63. The element 62 corresponds to the first term of equation (13), whereas the element 63 to the second term of equation (13). The results of the calculations at the elements 62 and 63 are added together on an adder 64 to obtain a torque command U, which is outputted to a servomotor 65. The parameter $V_p$ naturally converges to V. In this case, the elements 62 and 63 and the adder 64 constitute the reference model 51 and inverse system 52 shown in FIG. 5.

The circuit represented by block diagram of FIG. 6 does not include a positive feedback element corresponding to the element 6 in FIG. 1, and thus is capable of providing stabler control.

The speed loop processing according to the embodiment of this invention, which is executed by the digital signal processor 11 shown in FIG. 2, will be now described with reference to the flowchart of FIG. 7. The parameter $q_1$, the rise time T, and the positive constant $\beta$ are preset in a control unit. Upon start, the digital signal processor 11 executes the process shown in FIG. 7 at predetermined intervals of $\Delta t$.

First, in Step S1, a position command $\theta c$ is read from the common RAM 15, and, in Step S2, a position feedback $\theta r$ is read out through the DSL 14. Then, in Step S3, the difference between this position feedback $\theta r$ and a position feedback $\theta r$ which is stored in a register $R(\theta r)$ in the preceding cycle is divided by $\Delta t$ to obtain a current speed Y. The value of the position feedback $\theta r$ is stored in the register $R(\theta r)$ in Step 4 in order to be used in the subsequent cycle. Then, in Step S5, a position deviation ($\theta c$ - $\theta r$) is multiplied by the position loop gain $K_p$ to obtain a speed command $V_{cmd}$, and, in Step S6, the speed Y is subtracted from the speed command $V_{cmd}$ to obtain a speed deviation $U_m$.

In Step S7, a torque command U, which is obtained in the preceding cycle and stored in a register R-(U), and the speed Y obtained in Step S3, are subjected to a filtering processing of $1/(S + q_1)$, and the values V and $\zeta_1$ are obtained as follows:

$$V = U/(S + q_1)$$
$$\zeta_1 = Y/(S + q_1)$$

Subsequently, in Step S8, the calculation of equation (9) is carried out using $\zeta_1$ and speed Y, obtained in Step S7, and estimated values $K_{1p}$ and $G_p$ of the plant parameters $K_{1p}$ and $G_p$, calculated in the preceding cycle and stored in registers $R(K_{1p})$ and $R(G_p)$ respectively, to obtain $V_p$.

In Step S9, the values $K_{1p}$ and $G_p$ are estimated. That is, from the aforementioned equations (11) and (12),

$$\Delta K_{1p}/\Delta t = \beta^*(V - V_\rho)^*\zeta_1$$
$$\Delta G_p/\Delta t = \beta^*(V - V_\rho)^*Y$$

therefore,

$$\Delta K_{1p} = \beta^*(V - V_p)^*\zeta_1{}^*\Delta t$$
$$\Delta G_p = \beta^*(V - V_p)^*Y^*\Delta t$$

These values $K_{1p}$ and $G_p$ are added respectively to the values $K_{1p}$ and $G_p$ obtained in the preceding cycle and stored in the registers $R(K_{1p})$ and $R(G_p)$. In other words, the integrating processing represented by equations (11) and (12) is carried out to obtain estimated values of the plant parameters $K_{1p}$ and $G_p$.

Then, in Step S10, based on thus obtained $U_m$, $G_p$, $K_{1p}$ and Y, the calculation of equation (10), that is,

$$U = U_m{}^*[(1/T) + \{q_1/(T^*S)\}]^*G_p + K_{1p}{}^*Y$$

is carried out to obtain a torque command U, and the obtained U is then transferred to the current loop in Step S11. Finally, the value of the torque command U is stored in the register R(U) to be used in the subsequent cycle, Step S12.

Thus, by incorporating the pre-compensator including the reference model and the inverse system of the servomotor into the adaptive PI control system, the robust PI control can be made available even when the load such as a robot inertia is largely variable.

In the above description, a servomotor for driving a robot is exemplified as a plant, but this invention is also applicable, e.g., to a speed control loop of a numerical control device for controlling a machine tool which is subject to large load variation.

Further, in the foregoing embodiment, the controlled system is a first-order lag system, but similar effects can be obtained even when the inverse system is adapted to a controlled system of second or more order lag.

As described above, according to this invention, the reference model and inverse system having adaptivity are provided in the speed control loop of the servomotor, and thus optimum control can be achieved even if the inertia of a load is variable. Further, since the gain is automatically determined, the gain adjustment work is unnecessary.

Furthermore, an integrator (I) is included in the loop, unlike conventional adaptive control systems, so that the control system can be made available as an I-type servo system, and the steady-state deviation can be eliminated.

## Claims

1. An adaptive PI control system for carrying out PI control of a servomotor, comprising:
   a speed control loop; and
   a pre-compensator included in the speed control loop, and wherein
   said pre-compensator is equivalent and adaptive to a system which is a combination of a reference model and an inverse system of the servomotor.

2. An adaptive PI control system according to claim 1, wherein said pre-compensator adds together a term which is obtained by multiplying the sum of a proportional gain term and an integral gain term by a first estimated plant parameter, and a term which is obtained by multiplying a speed of the servomotor by a second estimated plant parameter.

3. An adaptive PI control system according to claim 1, wherein said pre-compensator adds a term, which is obtained by multiplying the sum of the first estimated plant parameter and the product of the second estimated plant parameter and the first parameter by the constant and the integral term, to a term, which is the product of said second estimated plant parameter and said integral term.

4. An adaptive PI control system according to claim 1, wherein said pre-compensator obtains a plant parameter based on a current input and speed of the servomotor by means of an identified model to converge the plant parameter.

5. An adaptive PI control system according to claim 1, wherein said servomotor is a servomotor for a robot.

FIG. 1

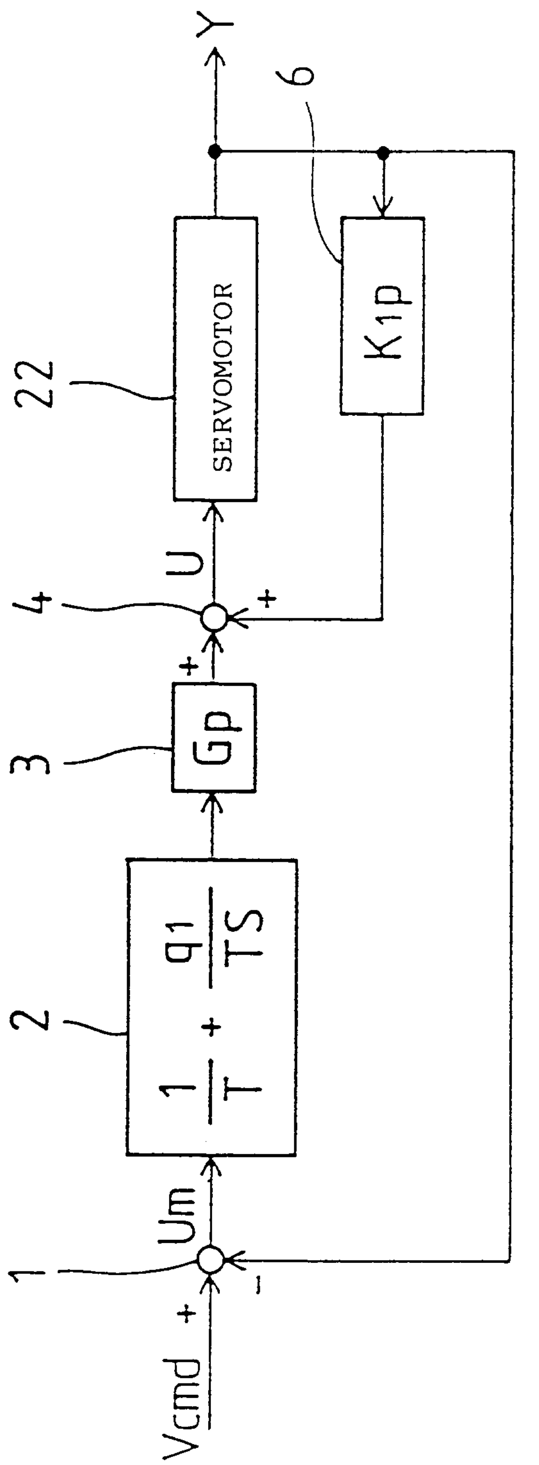

FIG. 2

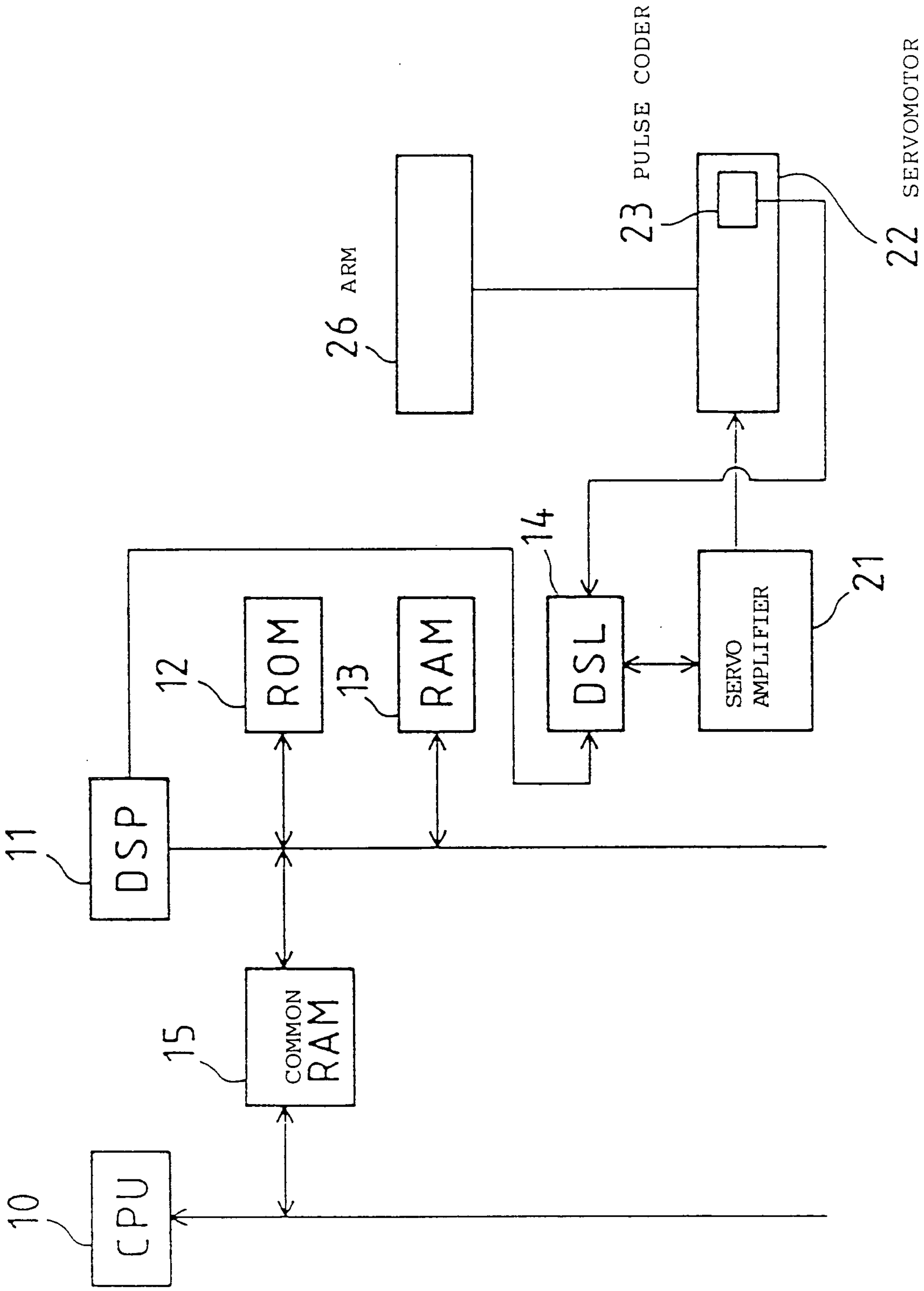
CPU
10
COMMON RAM
15
DSP
11
ROM
12
RAM
13
DSL
14
SERVO AMPLIFIER
21
SERVOMOTOR
22
PULSE CODER
23
ARM
26

FIG. 3

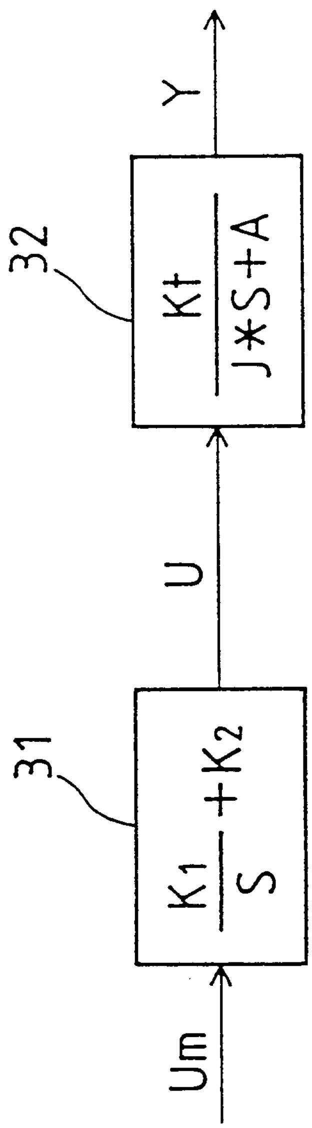

FIG. 4

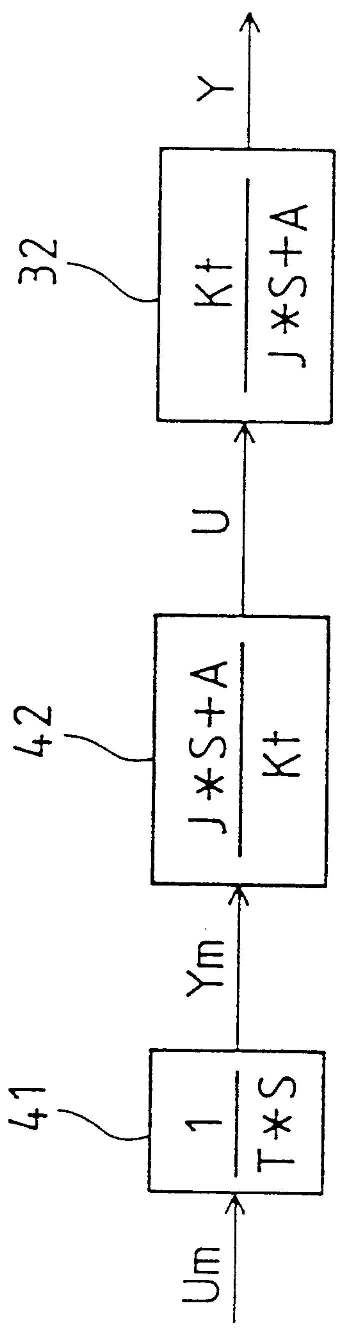

FIG. 5

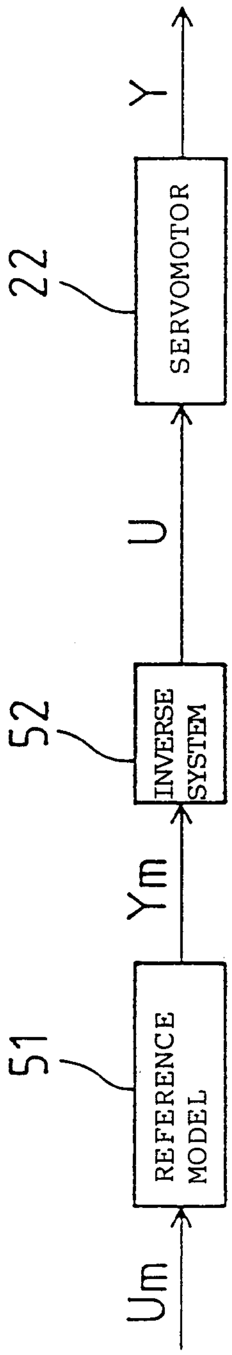

FIG. 6

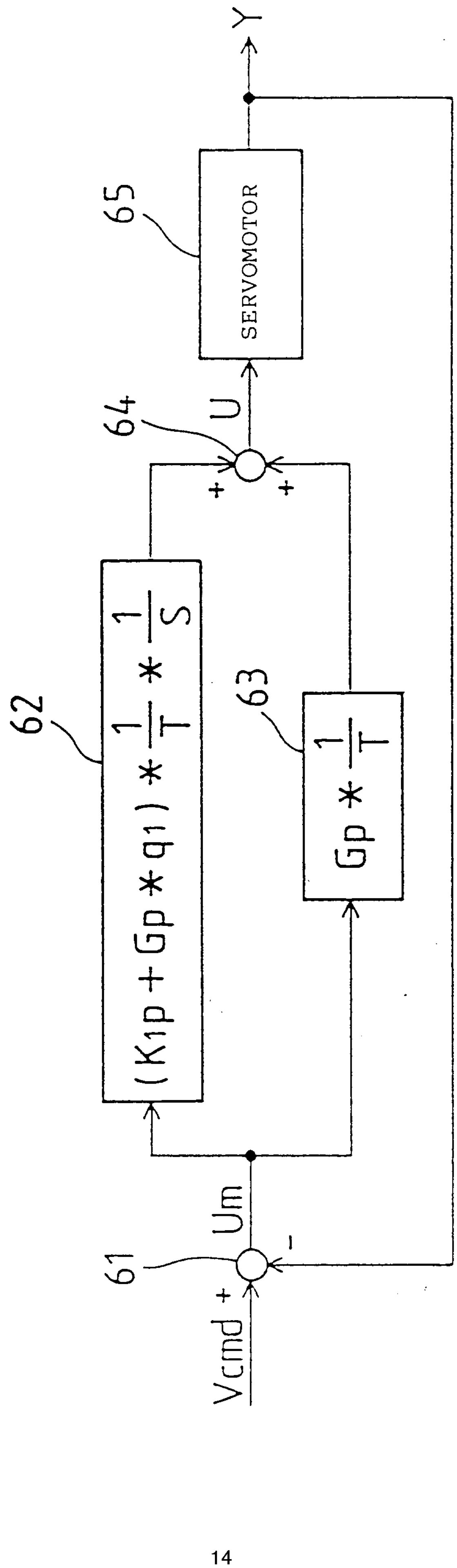

FIG. 7

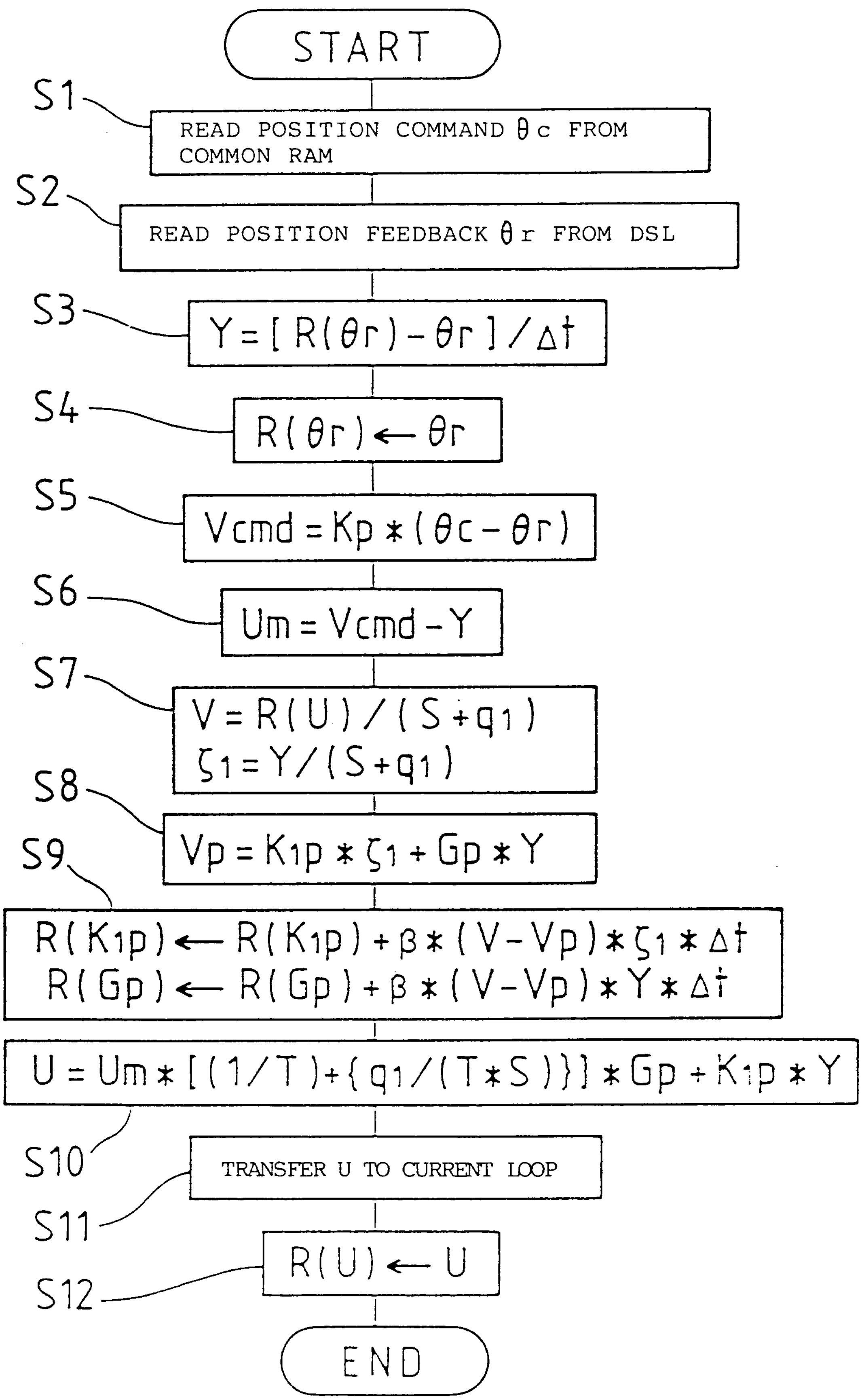
START
S1
READ POSITION COMMAND θc FROM COMMON RAM
S2
READ POSITION FEEDBACK θr FROM DSL
S3
Y = [R(θr) − θr] / Δt
S4
R(θr) ← θr
S5
Vcmd = Kp * (θc − θr)
S6
Um = Vcmd − Y
S7
V = R(U) / (S + q1)
ζ1 = Y / (S + q1)
S8
Vp = K1p * ζ1 + Gp * Y
S9
R(K1p) ← R(K1p) + β * (V − Vp) * ζ1 * Δt
R(Gp) ← R(Gp) + β * (V − Vp) * Y * Δt
U = Um * [(1/T) + {q1/(T * S)}] * Gp + K1p * Y
S10
TRANSFER U TO CURRENT LOOP
S11
R(U) ← U
S12
END

# INTERNATIONAL SEARCH REPORT

International Application No PCT/JP92/00478

**I. CLASSIFICATION OF SUBJECT MATTER** (if several classification symbols apply, indicate all) [6]

According to International Patent Classification (IPC) or to both National Classification and IPC

Int. $Cl^5$ G05D3/12

**II. FIELDS SEARCHED**

Minimum Documentation Searched [7]

| Classification System | Classification Symbols |
|---|---|
| IPC | G05D3/12, G05B13/04 |

Documentation Searched other than Minimum Documentation to the Extent that such Documents are Included in the Fields Searched [8]

| | |
|---|---|
| Jitsuyo Shinan Koho | 1932 - 1992 |
| Kokai Jitsuyo Shinan Koho | 1971 - 1992 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, A, 3-078806 (Toyo Electric Mfg. Co., Ltd.), April 4, 1991 (04. 04. 91), (Family: none) | 1-5 |
| A | JP, A, 3-082385 (Fanuc Ltd.), April 8, 1991 (08. 04. 91), (Family: none) | 1-5 |
| A | JP, A, 3-063704 (Matsushita Electric Ind. Co., Ltd.), March 19, 1991 (19. 03. 91), (Family: none) | 1-5 |
| A | JP, A, 1-314306 (Kyushu Denki Seizo K.K.), December 19, 1989 (19. 12. 89), (Family: none) | 1-5 |
| A | JP, A, 59-030104 (Electronics Research and Service Organisation Industorial Technology Research Institut), | 1-5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| July 1, 1992 (01. 07. 92) | July 21, 1992 (21. 07. 92) |
| International Searching Authority | Signature of Authorized Officer |
| Japanese Patent Office | |